Europäisches Patentamt

**European Patent Office**

**Office européen des brevets**

(19)

(11) Numéro de publication: **0 056 536**
**B1**

(12) # FASCICULE DE BREVET EUROPEEN

(45) Date de publication du fascicule du brevet:
01.08.84

(51) Int. Cl.³: **A 01 J 25/00,** A 01 J 25/15

(21) Numéro de dépôt: **81401857.8**

(22) Date de dépôt: **24.11.81**

(54) **Bac d'extraction pour la production de fromages à pâte pressée.**

(30) Priorité: **15.01.81 FR 8100611**

(43) Date de publication de la demande:
**28.07.82 Bulletin 82/30**

(45) Mention de la délivrance du brevet:
**01.08.84 Bulletin 84/31**

(84) Etats contractants désignés:
**AT BE CH DE GB IT LI NL**

(56) Documents cités:
**AU - B - 447 634**
**AU - D - 1 106 870**
**DE - B - 1 101 852**
**FR - A - 1 337 086**
**US - A - 2 193 462**

(73) Titulaire: **PIERRE GUERIN S.A., B.P. 12, F-79210 Mauze sur le Mignon (FR)**

(72) Inventeur: **Quilliou, Guy, 20, Square des Frères Montgolfier, F-79000 Niort (FR)**

(74) Mandataire: **Fontanié, Etienne, FIVES-CAIL BABCOCK 7, rue Montalivet, F-75383 Paris Cedex 08 (FR)**

ACTORUM AG

## Description

La présente invention concerne les bacs utilisés pour l'égouttage, le pressage et le tranchage du caillé destiné à la production de fromages à pâte pressée.

Ces bacs ont une section rectangulaire et leur fond est recouvert d'un tapis filtrant, métallique ou en matière plastique. Un plateau dont les dimensions sont légèrement inférieures à celles du bac est descendu dans celui-ci, après remplissage et égouttage du caillé, et permet d'exercer une pression sur le gâteau de caillé pour en extraire un volume supplémentaire de sérum qui, après avoir traversé le tapis filtrant, est évacué par des rainures et des canaux collecteurs prévus sur le fond du bac. Après pressage, l'une des parois d'extrémité du bac, qui est mobile verticalement, est soulevée et le tapis est déplacé pas à pas pour extraire le gâteau de caillé et le découper en blocs de dimensions prédéterminées au moyen de couteaux placés à la sortie du bac. Un tel bac est décrit notamment dans le document AU-B No 447634.

Pour pouvoir traiter avec un même bac des masses de caillé différentes, on a proposé (brevet US No 2193462) de placer dans le bac une cloison transversale dont la position est ajustable. Pour modifier le volume utile du bac, il est nécessaire non seulement de déplacer la cloison, ce qui peut être malaisé lorsque le bac est large et que la cloison est lourde, mais aussi d'adapter la longueur du plateau de pressage à la longueur utile du bac en mettant en place ou en démontant un certain nombre d'éléments amovibles constituant le plateau de pressage.

Le but de la présente invention est de réaliser un bac dont on puisse modifier le volume utile rapidement et facilement, sans qu'il soit nécessaire de changer les dimensions du plateau de pressage, dont la construction est de ce fait simplifiée, et dans lequel les efforts de pressage sont répartis uniformément sur toute la surface du gâteau de caillé, quelles que soient les dimensions.

Le bac d'extraction objet de l'invention est caractérisé en ce qu'une cloison transversale dont la position longitudinale est réglable est fixée sur l'extrémité du tapis filtrant située du côté de la paroi d'extrémité fixe du bac et est élastiquement compressible dans le sens vertical pour permettre le pressage du gâteau de caillé contenu dans le bac au moyen du plateau, des moyens étant prévus pour déplacer simultanément le tapis filtrant et la cloison transversale.

Pour régler le volume utile du bac, il suffit de mettre en marche le mécanisme de commande des déplacements du tapis pour amener la cloison transversale dans la position voulue.

L'étanchéité entre la paroi d'extrémité mobile et le tapis filtrant pourra avantageusement être réalisée au moyen d'un joint gonflable fixé sous ladite paroi.

Le mécanisme de commande des déplacements du tapis pourra être constitué par au moins une chaîne dont les extrémités sont fixées aux extrémités du tapis qui, de façon classique, a une longueur supérieure à celle du bac et passe sur un tambour de renvoi placé à l'avant du bac, cette chaîne passant au-dessus de la paroi d'extrémité fixe du bac, grâce à des poulies montées sur celui-ci et étant en prise avec une roue de commande pouvant être mise en rotation par un moteur. Le tapis est tendu au moyen d'un dispositif de tension agissant sur ladite chaîne. L'avance pas à pas du tapis peut être contrôlée par un générateur d'impulsions monté sur le tambour de renvoi.

Pour éviter ou du moins limiter les déformations du plateau de pressage qui pourraient notamment être provoquées par la réaction de la cloison transversale et assurer une répartition uniforme des efforts de pressage sur toute la surface du gâteau de caillé, les mouvements verticaux du plateau sont commandés, conformément à une autre caractéristique de l'invention, par quatre organes de levage dont les déplacements sont synchronisés et qui sont liés positivement au plateau en quatre points situés aux sommets d'un rectangle et équidistants du centre du plateau. Les organes de levage peuvent être constitués par des vérins synchronisés hydrauliquement. Ils peuvent aussi être constitués par des chaînes sans fin à brins verticaux dont un des brins est lié au plateau et qui sont tendues chacune entre deux roues dont l'une au moins est motrice, les roues motrices étant solidaires d'arbres parallèles entre eux et couplés en rotation par au moins une chaîne dont un brin est accroché à un organe moteur, tel qu'un vérin. Avantageusement, un système de verrouillage mécanique sera prévu pour interdire la descente non commandée du plateau.

Le bac de l'invention pourra encore comporter un volet de sécurité placé devant les couteaux pour empêcher l'accès accidentel à ces derniers et une rampe de remplissage horizontale supportée par des potences montées pivotantes sur un côté du bac pour permettre d'amener la rampe au milieu du bac et de la rétracter sur le côté.

D'autres caractéristiques de l'invention apparaîtront à la lecture de la description qui suit et se réfère aux dessins l'accompagnant qui montrent, à titre d'exemple non limitatif, un mode de réalisation de l'invention et sur lesquels:

la fig. 1 est une vue en élévation d'un bac réalisé conformément à l'invention;

la fig. 2 est une vue schématique, en coupe longitudinale, du bac, sans le plateau de pressage, montrant notamment le mécanisme de déplacement du tapis filtrant et le système de découpage du gâteau de caillé;

la fig. 3 est une vue simplifiée, en coupe transversale, du bac;

la fig. 4 est une vue partielle, en plan, du bac montrant la rampe de remplissage;

la fig. 5 est une coupe, à grande échelle, montrant la fixation de la cloison transversale sur le tapis filtrant;

la fig. 6 est une coupe suivant l'axe VI-VI de la fig. 3;

la fig. 7 est un schéma du mécanisme de commande des déplacements du plateau de pressage;

la fig. 8 montre, à grande échelle, le détail de la liaison du plateau de pressage aux chaînes de levage;

la fig. 9 est une vue en élévation, à grande échelle, de la barrière transversale, certaines parties ayant été coupées;

la fig. 10 est une coupe transversale suivant la ligne brisée X-X de la fig. 9;

la fig. 11 est une vue partielle de la barrière en position comprimée.

L'ensemble appelé bac d'extraction dans ce brevet comprend un bac proprement dit 10, un plateau de pressage 12 et différents accessoires et mécanismes de commande qui seront décrits ci-après.

Le bac 10 a une section rectangulaire, sa longueur étant nettement supérieure à sa largeur, et est supporté par un cadre horizontal muni de traverses et de pieds 14 reposant sur le sol. Il est formé d'un fond 18, de deux parois longitudinales 22 solidaires du fond et de deux parois d'extrémité dont l'une 24 est fixée au fond et aux parois 22 et l'autre 26 est mobile et constitue une porte que l'on peut ouvrir, en la manœuvrant au moyen d'un vérin 28, pour extraire le gâteau de caillé.

Le fond du bac est recouvert d'un tapis filtrant 30, généralement en matière plastique, et comporte des rainures longitudinales 32 (fig. 3) aboutissant à des collecteurs (non représentés) pour l'évacuation du liquide ayant filtré à travers le tapis. Celui-ci a une longueur supérieure à celle du bac et il passe sous la paroi 26 pour venir s'enrouler, suivant un arc de 180° environ, sur un tambour de renvoi 34 monté fou à l'avant du bac. Un joint gonflable 36 placé au bas de la paroi 26 permet d'assurer l'étanchéité entre celle-ci et le tapis 30.

Le tapis filtrant peut être déplacé sur le fond du bac, dans le sens de sa longueur, au moyen de deux chaînes 38 qui sont accrochées à ses deux extrémités et passent sur des poulies 40 montées folles sur le bac, en contournant la paroi 24, et sur deux roues 42 clavetées sur un arbre qui peut être entraîné en rotation par un groupe motoréducteur 44; la jante des roues 42 est conformée pour recevoir et entraîner sans glissement les chaînes 38. Deux poulies 41 reliées à un vérin 43 permettent de maintenir tendues les chaînes 38 et le tapis 30.

Sur l'extrémité du tapis 30 destiné à l'intérieur du bac, du côté de la paroi 24, est fixée une barrière transversale 46 formant une cloison mobile permettant de modifier à volonté le volume utile du bac. Cette barrière est conçue de telle sorte qu'elle puisse diminuer de hauteur lorsqu'elle est comprimée par le plateau 12. Elle est formée de deux parties ou plus, suivant l'importance de la réduction d'épaisseur du gâteau de caillé pendant le pressage, agencées télescopiquement. Des ressorts placés à l'intérieur de la barrière, qui est creuse, tendent à écarter les éléments dont elle est formée pour lui conserver sa hauteur maximale tant qu'elle n'est soumise qu'à des forces verticales faibles, inférieures à une valeur prédéterminée.

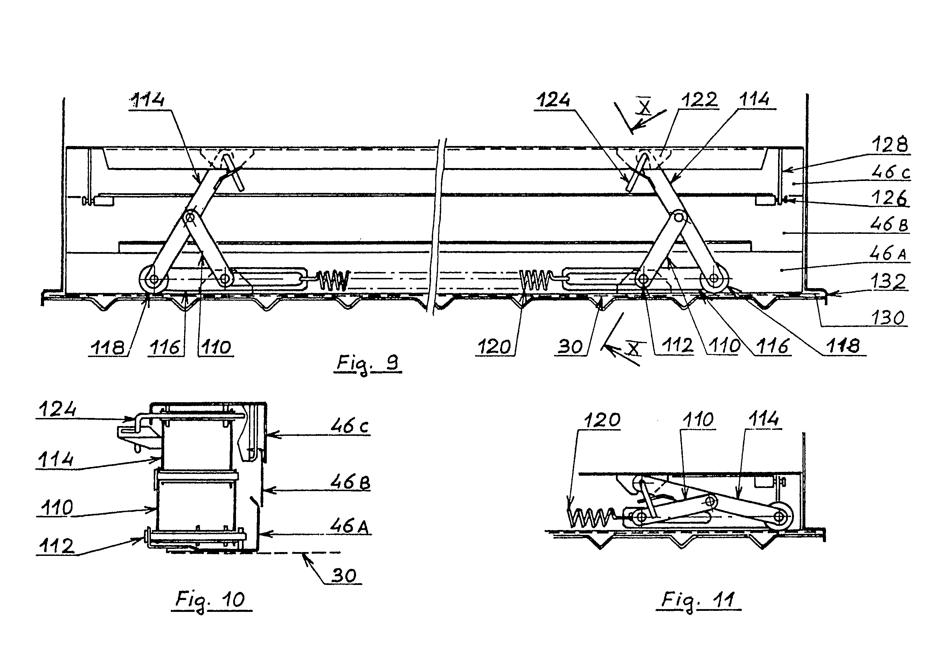

Dans le mode de réalisation représenté sur les fig. 9 à 11, la barrière est formée de trois parties 46a, 46b et 46c. La partie inférieure 46a est fixée sur le tapis 30 et porte le mécanisme à ressorts qui maintient normalement la barrière à sa hauteur maximale et permet de la comprimer. Ce mécanisme comporte, à chaque extrémité de la barrière, un levier 110 pivotant sur un axe 112 monté sur la partie inférieure 46a, un levier 114 articulé en son milieu sur l'extrémité du levier 110 et une ou plusieurs bielles 116 articulées sur l'extrémité inférieure du levier 114 et comportant une ouverture allongée, traversée par l'axe 112. Un ou plusieurs ressorts hélicoïdaux 120 sont tendus entre les extrémités des bielles disposées aux deux extrémités de la barrière.

La partie supérieure 46c de la barrière est supportée par les leviers 114; elle comporte des pattes 122 munies d'échancrures qui s'adaptent sur une entretoise tubulaire prévue à l'extrémité supérieure des leviers 114. Elle est maintenue en place au moyen de broches 124 placées dans les entretoises tubulaires et engagées dans les trous percés dans des pattes soudées sur cette partie de la barrière.

La partie intermédiaire 46b est suspendue à la partie supérieure au moyen de deux vis 126 qui peuvent coulisser dans des fentes verticales découpées dans des pièces 128 soudées sur la partie 46c.

En position normale, lorsque aucun effort important n'est exercé sur la barrière, les ressorts 120 maintiennent les bielles en butée contre les axes 112, les leviers se trouvent alors dans la position qu'ils occupent sur la fig. 9. Si on exerce sur la partie supérieure 46c un effort de compression vertical dirigé vers le bas et suffisant pour vaincre la force des ressorts 120, les leviers 110 et 114 vont pivoter et permettre le déplacement vers le bas des parties 46b et 46c de la barrière qui viendront finalement occuper la position représentée sur la fig. 11. Les déplacements horizontaux des bielles 116 et de l'extrémité inférieure des leviers 114, qui accompagnent la rotation de ces derniers, sont facilités par des roulettes 118 montées folles sur l'axe d'articulation de ces éléments. Lorsqu'on supprime l'effort de compression sur la barrière, les ressorts 120 font pivoter les leviers 114 qui soulèvent les parties 46b et 46c qui sont ramenées dans leurs positions initiales.

Des talons 130 fixés sous la barrière 46, à ses deux extrémités, sont engagés dans des glissières longitudinales 132 prévues au fond du bac, pour interdire le basculement de la barrière.

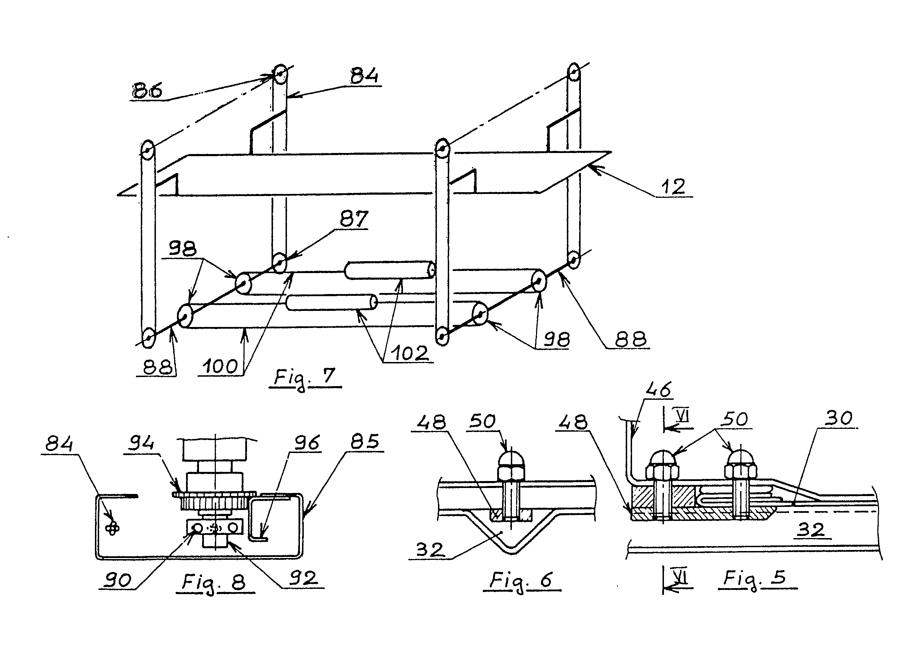

La fixation de la barrière 46 sur le tapis 30 est effectuée au moyen de fers plats 48 disposés longitudinalement et percés de trous filetés dans lesquels viennent se fixer des vis 50 (fig. 5 et 6). Les fers plats et les extrémités des vis sont disposés dans les rainures 32 du fond du bac; cette disposition évite tout frottement métal sur métal.

Pendant le remplissage du bac et l'égouttage du caillé une rehausse 60 constituée par une tôle perforée est fixée sur la barrière 46; cette rehausse est enlevée avant le pressage.

La face inférieure de la paroi d'extrémité mobile 26 est recouverte d'un panneau filtrant 62 formé d'une tôle perforée maintenue à l'écart de la paroi pour permettre l'évacuation d'une partie du sérum pendant l'égouttage et le pressage du caillé.

Des couteaux verticaux 64 sont placés devant la paroi 26. Ils sont régulièrement répartis sur la largeur du tapis 30 et servent à diviser le gâteau de caillé en plusieurs barres de sections identiques lorsque celui-ci est extrait du bac par déplacement du tapis, après ouverture de la porte 26. Ces couteaux restent fixes pendant toute l'opération d'évacuation et de découpage du gâteau de caillé, mais peuvent être relevés, au moyen d'un vérin 66, pour réglage ou entretien. L'écartement des couteaux 64 sur leur support peut être réglable pour la production de différents types de fromage; en variante, plusieurs jeux de couteaux interchangeables peuvent être prévus.

Un couteau transversal 68 est placé devant les couteaux 64; il peut être déplacé verticalement par un vérin 70 et sert à découper les barres de caillé en blocs parallélépipédiques. Pour cela, le tapis 30 avance pas à pas et à chaque arrêt le couteau 68 descend puis, après évacuation des blocs de caillé, remonte pour permettre une nouvelle avance du tapis et du gâteau de caillé. Ces opérations sont commandées automatiquement par un système qui contrôle la marche du groupe motoréducteur 44 et le fonctionnement du vérin 70. Ce système comporte un organe de mesure du déplacement du tapis, qui peut être constitué, par exemple, par un générateur d'impulsions monté sur le tambour 34 et un compteur associé, et un organe qui compare la valeur mesurée à une valeur de consigne, affichée par un opérateur avant le début de l'opération, et commande l'arrêt du moteur du groupe 44 quand cette valeur de consigne est atteinte. Le système commande ensuite la descente et la remontée du couteau 68, puis la remise en route du moteur 44. Un détecteur de proximité interrompt ce cycle d'opérations quand la barrière 46 se trouve à faible distance des couteaux 64. La remise en route du tapis après chaque arrêt peut aussi être commandée par un opérateur.

Devant le tambour 34 est disposée une tablette 72 dont le plan supérieur est situé au niveau du tapis 30. Cette tablette reçoit les blocs de caillé qui viennent d'être découpés par le couteau 68 et qui sont poussés par le gâteau de caillé lorsque le tapis avance d'un pas supplémentaire.

Un volet de sécurité 76 est placé devant le couteau 68 pour interdire l'accès accidentel à ce dernier pendant l'extraction et le découpage du gâteau de caillé. Le bord supérieur de ce volet est fixé à un arbre horizontal monté sur des paliers, l'arbre et les paliers étant conçus pour permettre un démontage rapide du volet. L'arbre porte une manivelle qui est munie d'un manneton coulissant dans la boutonnière d'une chape fixée à la tige d'un vérin 75 monté pivotant autour d'un axe horizontal parallèle à l'arbre du volet. Cette construction laisse le volet libre d'osciller lorsqu'il est en position basse et ne permet son relevage, au moyen du vérin 75, que s'il a été au préalable écarté de sa position verticale par les blocs de caillé extraits du bac. Lorsqu'il n'y a pas de bloc de caillé sur la tablette 72, le volet 76 est vertical. Lorsque le tapis 30 avance, le gâteau de caillé pousse le volet et le soulève. Quand le tapis s'arrête, le couteau 68 descend, puis le volet 76 est soulevé par le vérin 75; on peut ainsi accéder aux blocs de caillé pour les évacuer. Au début du cycle d'opérations suivant, le vérin 75 abaisse le volet 76 qui doit alors revenir en position verticale. Un détecteur de proximité interdit la remontée du couteau 68 et la mise en route du tapis 30 si le volet est empêché d'atteindre cette position par un obstacle quelconque.

On peut aussi prévoir de placer de part et d'autre du gâteau de caillé des volets montés fous sur l'arbre du volet 76 pour empêcher l'accès latéral au couteau 68.

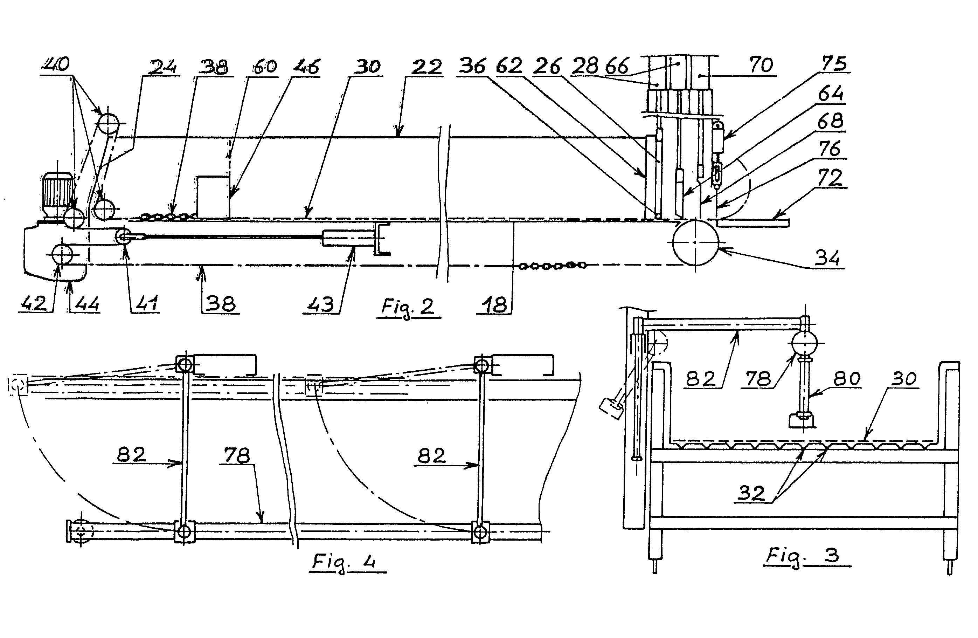

Pour le remplissage du bac 10, on utilise une rampe 78 constituée par un tube horizontal situé à un niveau supérieur à celui des bords du bac et muni de plusieurs pipettes 80 (fig. 3 et 4). Cette rampe est supportée par deux potences 82 montées pivotantes, autour d'axes verticaux, sur un côté du bac. Elle est montée sur les potences par l'intermédiaire de colliers permettant sa rotation autour de son axe. Lorsque la rampe est en service, elle est placée dans le plan médian longitudinal du bac et les pipettes sont orientées verticalement et plongent dans le bac (position représentée en traits continus sur les fig. 3 et 4). Lorsque le remplissage est terminé, on fait tourner la rampe pour orienter les pipettes à l'horizontale, puis on fait tourner les potences pour amener la rampe au-dessus de la paroi longitudinale du bac, les pipettes se trouvant à l'extérieur du bac (position représentée en tirets sur les fig. 3 et 4). Cette manœuvre est faite manuellement, mais on pourrait prévoir de faire tourner la rampe et les potences au moyen de vérins ou d'autres mécanismes commandés manuellement ou automatiquement.

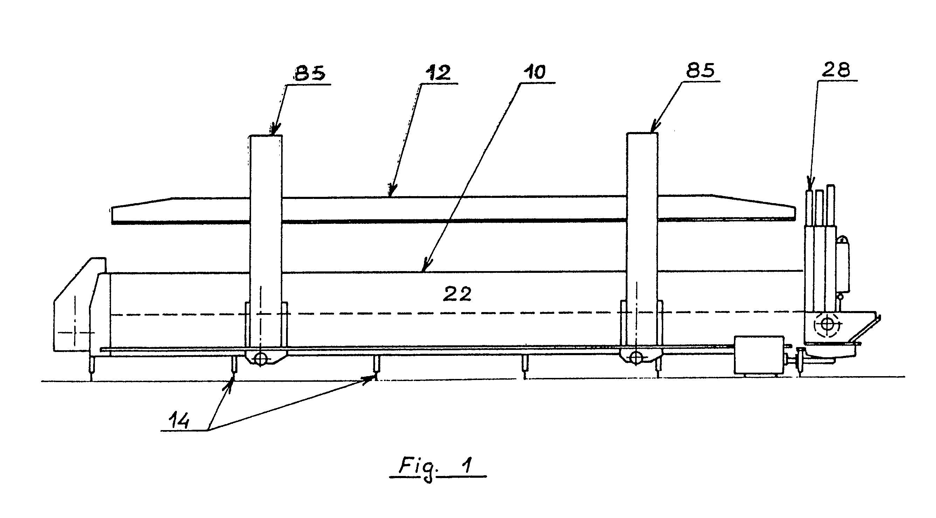

Le mécanisme assurant les déplacements verticaux du plateau 12 est représenté schématiquement sur la fig. 7; il comporte quatre organes de levage identiques se déplaçant en synchronisme et liés positivement au plateau en quatre points disposés aux sommets d'un rectangle et équidistants du centre du plateau. Chaque organe de levage est constitué par une chaîne sans fin 84 à brins verticaux, qui est logée dans un poteau creux 85 solidaire du bac 10 (fig. 1), et qui est tendue entre une roue supérieure 86 montée folle sur le poteau et une roue inférieure 87 clavetée sur un arbre horizontal 88 monté sous le bac.

Le plateau 12 est lié à l'un des brins de chaque chaîne 84 par l'intermédiaire d'un moyeu 90 fixé sur la chaîne et monté sans jeu sur un bout d'arbre 92 horizontal et solidaire du plateau (fig. 8). Les poteaux 85 sont ouverts sur leur face intérieure pour permettre le passage des bouts d'arbre 92 pendant les déplacements verticaux du plateau. Des galets 94 montés fous sur les bouts d'arbre 92 coopèrent avec des rails de guidage verticaux 96, fixés sur les poteaux 85, pour interdire les mouvements du plateau 12 dans son plan. Des moyens sont prévus pour régler la position des moyeux 90 le long des chaînes respectives et pour tendre ces dernières.

Les deux roues 87 de chaque paire de chaînes placées face à face sur les côtés opposés sont clavetées sur le même arbre 88 qui porte, en outre, deux autres roues 98. Deux chaînes 100 sont tendues entre les roues 98 des deux arbres 88, les deux extrémités de chaque chaîne étant reliées au piston d'un vérin 102 fixé sous le bac. La jante des roues 87 et 98 est conformée pour recevoir et entraîner sans glissement les chaînes 84 et 100 respectivement, de sorte que le déplacement du piston des vérins 102 dans l'un ou dans l'autre sens provoque le déplacement du plateau 12 vers le haut ou vers le bas. Des moyens sont prévus pour guider les chaînes 100 et les tendre.

Des verrous montés sur chaque poteau ou sur certains d'entre eux seulement viennent se placer automatiquement sous les bouts d'arbres 92 respectifs, lorsque le plateau arrive en position haute, pour interdire sa descente. Un système de sécurité interdit le retrait des verrous tant qu'un ordre de descente n'a pas été donné aux vérins 102.

Le plateau 12 porte sur sa face inférieure des buses qui servent à projeter un liquide de lavage sur les parois et le fond du bac, quand celui-ci est vide; ces buses sont protégées pendant le pressage par des moyens appropriés. Une rampe est également prévue pour nettoyer le tapis 30 pendant son déplacement à l'extérieur du bac.

## Revendications

1. Bac d'entretien rectangulaire pour la production de fromages à pâte pressée comportant une paroi d'extrémité fixe (24) et une paroi d'extrémité mobile verticalement (26), des parois longitudinales (22), un tapis filtrant (30) reposant sur le fond du bac et déplaçable dans le sens de la longueur du bac, des moyens pour déplacer ce tapis et un plateau de pressage (12) dont les dimensions horizontales ne sont que légèrement inférieures aux dimensions intérieures du bac, caractérisé en ce que, de manière connue en soi, il comporte une cloison transversale (46) réglable en position longitudinale dans le bac et qui, avec les parois longitudinales (22) et la paroi mobile d'extrémité (26), définit le volume utile du bac, ladite cloison transversale (46) étant fixée sur l'extrémité du tapis filtrant (30) située du côté de la paroi d'extrémité fixe (24) et étant élastiquement compressible dans le sens vertical pour permettre le pressage du gâteau de caillé contenu dans le bac au moyen dudit plateau (12), et en ce que les moyens prévus pour déplacer le tapis filtrant (30) déplacent simultanément la cloison transversale (46).

2. Bac d'extraction selon la revendication 1, caractérisé en ce que ladite cloison est formée d'une partie inférieure (46a) fixée sur l'extrémité du tapis filtrant (30), d'une partie supérieure (46c) et éventuellement d'une ou plusieurs parties intermédiaires (46b), et comporte des ressorts (120) tendant à écarter l'une de l'autre les parties inférieure et supérieure et des butées limitant cet écartement.

3. Bac d'extraction selon la revendication 2, caractérisé en ce que les parties inférieure (4a) et supérieure (4c) de ladite cloison sont reliées entre elles aux extrémités de la cloison par deux systèmes de deux leviers (110, 114) articulés entre eux et sur lesdites parties de la cloison et lesdits ressorts (120) sont tendus entre les leviers correspondants des deux systèmes.

4. Bac d'extraction selon la revendication 3, caractérisé en ce que l'un des leviers (114) de chaque système est articulé sur l'autre levier (110) sensiblement en son milieu, son extrémité supérieure est liée par une articulation à la partie supérieure (46c) de ladite cloison et son extrémité inférieure prend appui sur l'extrémité inférieure (46a) de la cloison par l'intermédiaire d'une roulette (118), lesdits ressorts (120) étant tendus entre les extrémités inférieures de ces leviers (114) dont le rapprochement est limité par lesdites butées (112, 116).

5. Bac d'extraction selon l'une des revendications 3 ou 4, caractérisé en ce que la partie supérieure (46c) de ladite cloison est fixée de manière amovible sur les leviers qui la supportent.

6. Bac d'extraction selon l'une des revendications précédentes, caractérisé en ce que les moyens pour déplacer le tapis (30) comportent au moins une chaîne (38) dont les extrémités sont fixées aux extrémités du tapis qui, de façon connue en soi, a une longueur supérieure à celle du bac et s'enroule sur un tambour de renvoi (34) placé à l'avant du bac (10) et en ce que cette chaîne passe au-dessus de la paroi d'extrémité fixe (24), grâce à des poulies (40) montées sur le bac, et est en prise avec une roue (42) pouvant être mise en rotation par un moteur (44).

7. Bac d'extraction selon la revendication 6, caractérisé en ce que les moyens pour déplacer le tapis (30) assurent une avance pas à pas de ce dernier, de façon connue en soi, et cette avance est contrôlée par un générateur d'impulsions monté sur le tambour de renvoi (34).

8. Bac d'extraction selon l'une des revendications précédentes, caractérisé en ce que les mouvements verticaux du plateau de pressage (12) sont commandés par quatre organes de levage identiques (84) dont les déplacements sont synchronisés et qui sont liés positivement au plateau (12) en quatre points situés aux sommets d'un rectangle et équidistants du centre du plateau.

9. Bac d'extraction selon la revendication 8, caractérisé en ce que les organes de levage sont constitués par des chaînes sans fin (84), à brins verticaux, dont un des brins est lié au plateau, et qui sont tendues chacune entre deux roues (86, 87) dont l'une au moins est motrice, les roues motrices (87) étant solidaires d'arbres (88) parallèles entre eux et couplés en rotation par au moins une chaîne (100) dont l'un des brins est accroché à un organe moteur (102).

10. Bac d'extraction selon l'une des revendications 8 ou 9, caractérisé en ce qu'il comporte un système de verrouillage du plateau (12) en position haute pour interdire la descente non commandée du plateau.

11. Bac d'extraction selon l'une des revendications précédentes, caractérisé en ce qu'il comporte une rampe de remplissage (78) disposée horizontalement et longitudinalement au-dessus du bac (10) et supportée par des potences (82) montées pivotantes, autour d'axes verticaux, sur un côté du bac.

12. Bac d'extraction selon l'une des revendications précédentes, caractérisé en ce qu'un joint gonflable (36) est fixé sur la paroi d'extrémité mobile (26) et assure l'étanchéité entre le tapis filtrant (30) et ladite paroi lorsque celle-ci est en place.

13. Bac d'extraction selon l'une des revendications précédentes, comportant, de manière connue en soi, des couteaux verticaux (64, 68) pour le découpage du gâteau de caillé en blocs parallélépipédiques, l'un de ces couteaux (68) étant disposé transversalement et associé à un vérin (70) permettant de le déplacer verticalement en va-et-vient, un volet de sécurité (76) pivotant autour d'un axe horizontal et placé devant lesdits couteaux et un système qui commande l'avance pas à pas du tapis (30) et, à chaque arrêt de ce dernier, la descente du couteau transversal (68), puis sa remontée après évacuation des blocs de caillé, caractérisé en ce qu'il comporte en outre un vérin (75) qui permet de faire pivoter ledit volet (76), ledit système commandant ce vérin pour soulever le volet (76) après la descente du couteau transversal (68), pour permettre l'évacuation des blocs de caillé, et pour le laisser retomber ensuite, et un détecteur de proximité qui interdit la remontée du couteau transversal (68) et l'avance du tapis (30) tant que le volet (76) n'est pas revenu en position verticale.

**Patentansprüche**

1. Rechteckiger Extraktionsbehälter für die Herstellung von gepresstem Käse mit einer festen Endwand (24) und einer in senkrechter Richtung beweglichen Endwand (26), Seitenwänden (22), einem Filterband (30), das auf dem Behälterboden aufliegt und in der Längsrichtung des Behälters beweglich ist, Mitteln für die Bewegung dieses Bandes und einer Pressplatte (12), deren waagrechte Abmessungen nur etwas kleiner sind als die Innenabmessungen des Behälters, dadurch gekennzeichnet, dass er in bekannter Weise eine in der Längsrichtung des Behälters verstellbare Querwand (46) besitzt, die mit den Seitenwänden (22) und der beweglichen Endwand (26) das Nutzvolumen des Behälters bestimmt, wobei die Querwand (46) an dem Ende des Filterbandes (30) befestigt ist, das sich auf der Seite der festen Endwand (24) befindet, und in senkrechter Richtung elastisch zusammengepresst werden kann, um das Pressen des im Behälter befindlichen Käsebruchkuchens mit Hilfe der Platte (12) zu ermöglichen, und dass die für die Bewegung des Filterbandes (30) vorgesehenen Mittel gleichzeitig die Querwand (46) verschieben.

2. Extraktionsbehälter gemäss Anspruch 1, dadurch gekennzeichnet, dass die Querwand aus einem an dem Ende des Filterbandes (30) befestigten unteren Teil (46a), einem oberen Teil (46c) und eventuell einem oder mehreren Zwischenteilen (46b) besteht und Federn (120) besitzt, die den unteren und den oberen Teil auseinanderspreizen sowie Anschläge, die diese Spreizung begrenzen.

3. Extraktionsbehälter gemäss Anspruch 2, dadurch gekennzeichnet, dass der untere Teil (4a) mit dem oberen Teil (4c) der Querwand an den Enden derselben durch zwei Hebelsysteme (110, 114) verbunden ist, wobei die Hebel untereinander und an den Teilen der Querwand gelenkig und die Federn (120) zwischen den entsprechenden Hebeln der beiden System gespannt sind.

4. Extraktionsbehälter gemäss Anspruch 3, dadurch gekennzeichnet, dass einer der Hebel (114) jedes Systems auf dem anderen Hebel (110) ungefähr in der Mitte gelenkig ist, sein oberes Ende an dem oberen Teil (46c) der Querwand durch ein Gelenk verbunden ist, und sein unteres Ende sich über eine Rolle (118) auf das untere Ende (46a) der Querwand stützt, wobei die Federn (120) zwischen den unteren Enden dieser Hebel (114) gespannt sind, und die Anschläge (112, 116) die Näherung der Hebel begrenzen.

5. Extraktionsbehälter gemäss einem der beiden Ansprüche 3 oder 4, dadruch gekennzeichnet, dass der oberen Teil (46c) der Querwand lösbar an den ihn tragenden Hebeln befestigt ist.

6. Extraktionsbehälter gemäss irgendeinem der obigen Ansprüche, dadurch gekennzeichnet, dass die für die Bewegung des Filterbandes (30) vorgesehenen Mittel wenigstens eine Kette (38) besitzen, deren Enden an den Enden des Filterbandes befestigt sind, welches in bekannter Weise länger als der Behälter ist über eine vorn am Behälter (10) befindliche Umkehrtrommel (34) läuft, und dass diese Kette mit Hilfe von am Behälter befestigten Scheiben (40) über die feste Endwand (24) geführt wird und mit einem Rad (42) im Eingriff ist, das durch einen Motor (44) in Drehung gesetzt werden kann.

7. Extraktionsbehälter gemäss Anspruch 6, dadurch gekennzeichnet, dass die Mittel für die Bewegung des Filterbandes (30) einen in bekannter Weise schrittweisen Vorschub des letzteren gewährleisten, wobei dieser Vorschub durch einen auf der Umkehrtrommel (34) montierten Impulserzeuger gesteuert wird.

8. Extraktionsbehälter gemäss irgendeinem der obigen Ansprüche, dadurch gekennzeichnet, dass die senkrechten Bewegungen der Pressplatte (12) durch vier identische Huborgane (84) gesteuert werden, deren Bewegungen synchronisiert sind und die mit der Pressplatte (12) an vier an den Spitzen eines Rechtecks befindlichen und vom Mittelpunkt der Platte abstandsgleichen Punkten verbunden sind.

9. Extraktionsbehälter gemäss Anspruch 8, dadurch gekennzeichnet, dass die Huborgane aus endlosen Ketten (84) mit senkrechten Trummen bestehen, von denen eines mit der Platte verbunden ist, und jede Kette zwischen zwei Rollen (86, 87) gespannt ist, von denen wenigstens eine eine Antriebsrolle ist, wobei die Antriebsrollen (87) kraftschlüssig mit Wellen (88) verbunden sind, die zueinander parallel liegen und durch mindestens eine Kette (100), von welcher ein Trumm an ein Motororgan (102) angehängt ist, in Drehung gekoppelt sind.

10. Extraktionsbehälter gemäss einem der beiden Ansprüche 8 oder 9, dadurch gekennzeichnet, dass er eine Verriegelungssystem der Pressplatte (12) in ihrer oberen Stellung besitzt, um zu verhindern, dass sich die Platte ungesteuert senkt.

11. Extraktionsbehälter gemäss irgendeinem der obigen Ansprüche, dadurch gekennzeichnet, dass er eine Einfüllrampe (78) besitzt, die waagrecht und in der Längsachse über dem Behälter (10) angebracht ist und von zwei auf einer der Behälterseite senkrecht schwenkbar montierten Armen (82) getragen wird.

12. Extraktionsbehälter gemäss irgendeinem der obigen Ansprüche, dadurch gekennzeichnet, dass eine Blähdichtung (36) an der beweglichen Endwand (26) befestigt ist und dieselbe, wenn sie eingesetzt ist, mit dem Filterband (30) abdichtet.

13. Extraktionsbehälter gemäss irgendeinem der obigen Ansprüche mit in bekannter Weise senkrechten Messern (64, 68) zum Schneiden des Käsebruchkuchens in parallelepideförmige Blökke, wobei eines der Messer (68) quer angeordnet und mit einem Hubzylinder (70) verbunden ist, der seine senkrechte Hin- und Herbewegung gestattet, mit einer Sicherheitsklappe (76), die sich um eine waagerechte Achse dreht und vor den Messern angeordnet ist, und mit einem System, das den schrittweisen Vorschub des Filterbandes (30) steuert sowie bei jedem Stillstand des letzteren das Senken des Quermessers (68) und nach der Austragung der Käsebruchblöcke sein Wiederheben, dadurch gekennzeichnet, dass er einen weiteren Zylinder (75) besitzt, der die Sicherheitsklappe (76) schwenkt, wobei das System diesen Zylinder betätigt, um die Klappe (76) anzuheben, nachdem sich das Quermesser (68) gesenkt hat und so die Austragung der Käsebruchblöcke zu ermöglichen und sie nach diesem Vorgang wieder fallen zu lassen, und einen Näherungsschalter, der das Heben des Quermessers (68) und den Vorschub des Filterbandes (30) so lange untersagt, wie die Sicherheitsklappe (76) nicht in ihre senkrechte Stellung zurückgekehrt ist.

**Claims**

1. A rectangular extraction tank for the production of pressed cheese comprising a fixed end wall (24) and an end wall movable vertically (26), longitudinal walls (22), a filter belt (30) resting on the bottom of the tank and movable in the direction of the length of the tank, means for moving this belt and a pressure plate (12), the horizontal dimensions of which are only slightly smaller than the interior dimensions of the tank, characterized in that, in a known *per se* manner, it comprises a transversal partition (46) adjustable in the longitudinal position in the tank and which, with the longitudinal walls (22) and the movable end wall (26), determines the effective volume of the tank, said transversal partition (46) being fixed on the filter belt (30) located on the side of the fixed end wall (24) and being elastically compressible in the vertical direction to enable the curd filter cake contained in the tank to be pressed by means of said plate (12), and in that the means provided for moving the filter belt (30) simultaneously moves the transversal partition (46).

2. An extraction tank according to Claim 1, characterized in that said partition consists of a lower part (46a) fixed on the extremity of the filter belt (30), an upper part (46c) and if necessary one or several intermediate parts (46b) and comprises springs (120) tending to separate the lower and upper parts from one another and stops limiting this separation.

3. And extraction tank according to Claim 2, characterized in that the lower and upper parts (respectively 4a and 4c) of said partition are connected to one another and to the extremities of the partition by two lever systems (110, 114) linked to one another by a joint and on said parts of the partition and said springs (120) are tensioned between the corresponding levers of the two systems.

4. An extraction tank according to Claim 3, characterized in that one of the levers (114) of each system is linked by a joint to the other lever (110) substantially in its middle part, its upper extremity is linked by a joint to the upper part (46c) of said partition and its lower extremity rests on the lower extremity (46a) of the partition by means of a roller (118), said springs (120) being tensioned between the lower extremities of these levers (114), whose movement towards one another is limited by said stops (112, 116).

5. An extraction tank according to Claim 3 or 4, characterized in that the upper part (46c) of said partition is fixed removably on the levers which support it.

6. An extraction tank according to any of the preceding Claims, characterized in that the means for moving the belt (30) comprise at least one chain (38), the extremities of which are fixed to the extremities of the belt which, in a manner known in itself, has a length greater than that of the tank and winds itself onto a tail pulley drum (34) placed in the front part of the tank (10) and in that this chain passes above the fixed end wall (24), by means of pulleys (40) mounted on the tank, and engages with a wheel (42) which can be rotated by a motor (44).

7. An extraction tank according to Claim 6, characterized in that the means for moving the belt (30) advance the latter step by step, in a known *per se* manner, and this advance is controlled by a pulse generator mounted on the tail pulley drum (34).

8. An extraction tank according to any of the preceding Claims, characterized in that the vertical movements of the pressure plate (12) are controlled by four identical hoisting components (84) whose movements are synchronized and which are attached positively to the plate (12) at four points located at the apices of a rectangle and equidistant from the centre of the plate.

9. An extraction tank according to Claim 8, characterized in that the hoisting components consist of endless chains (84) with vertical sides, one of the sides of which is connected to the plate and each of which is tensioned between two wheels (86, 87) of which at least one is a driving wheel, the driving wheels (87) being integral with shafts (88) parallel to one another and coupled for rotation by at least one chain (100) of which one of the sides is hooked to a driving component (102).

10. An extraction tank according to Claim 8 or 9, characterized in that it comprises a system for locking the plate (12) in the high position to prevent the non-scheduled descent of the plate.

11. An extraction tank according to any of the preceding Claims, characterized in that it comprises a filling pipe (78) placed horizontally and longitudinally above the tank (10) and supported by brackets (82) mounted in a manner such that they can rotate about vertical axes, on one side of the tank.

12. An extraction tank according to any of the preceding Claims, characterized in that an inflatable joint (36) is fixed on the movable end wall (26) and provides a seal between the filter belt (30) and said wall, when the latter is in position.

13. An extraction tank according to any of the preceding Claims, comprising in a known *per se* manner, vertical cutters (64, 68) for cutting the curd cake into parallelepipedal blocks, one of these cutters (68) being placed transversally and combined with a jack (70) for moving it vertically to and fro, a safety shutter (76) rotating about a horizontal axis and placed in front of said cutters and a system which controls the step by step advance of the belt (30) and, at each stop of the latter, the descent of the transversal cutter (68) and then its upward movement after the discharge of the curd blocks, characterized in that it comprises in addition a jack (75) which enables said shutter (76) to be rotated, said system controlling this jack to raise the shutter (76) after the descent of the transversal cutter (68), to allow the curd blocks to be discharged, and to let it then fall again, and a proximity defector which prevents the transversal cutter (68) from ascending again and the belt (30) from advancing so long as the shutter (76) has not returned to its vertical position.

Fig. 1

Fig. 2

Fig. 4

Fig. 3

0 056 536

Fig. 5

Fig. 6

Fig. 7

Fig. 8

Fig. 9

Fig. 10

Fig. 11